# EUROPEAN PATENT APPLICATION

(11) **EP 4 752 765 A1**
(43) Date of publication of application: **03.06.2026**
(21) Application number: 23950257.8
(22) Date of filing: 31.08.2023
(51) Int. Cl.: G06F 21/57

(54) **VULNERABILITY IDENTIFICATION METHOD AND APPARATUS BASED ON LARGE LANGUAGE MODEL, AND STORAGE MEDIUM**

(71) Applicant: Siemens Aktiengesellschaft, 80333 München (DE)
(72) Inventor: SONG, Jie, Suzhou, Jiangsu 215000 (CN)
(74) Representative: Isarpatent
(86) International application number: PCT/CN2023/116362
(87) International publication number: WO 2025/043678

(57) **Abstract**

Provided in the present invention are a vulnerability identification method and apparatus based on a large language model, and a storage medium. The method comprises: acquiring metadata of a device, and vulnerability descriptions; using a large language model to extract key features from the metadata, and using the large language model to extract related vulnerability information from the vulnerability descriptions; using the large language model to match fields of the key features with fields of the related vulnerability information, so as to obtain mapping relationships between the key features and the related vulnerability information; on the basis of the mapping relationships, using the large language model to identify a vulnerability description matching the metadata; and on the basis of the vulnerability description matching the metadata, using the large language model to generate a visualized result. By means of the technical solution in the embodiments of the present invention, the metadata of the device can be effectively analyzed, and the metadata is associated with a vulnerability library, thereby effectively enhancing the passive vulnerability detection and reducing the requirements for intrusive active scanning technology.

## Description

### Technical field

The present invention relates to the fields of data security and vulnerability detection, in particular to a vulnerability identification method and apparatus based on a large language model, and a storage medium.

### Background Art

OT is an acronym for operational technology, which in a broad sense is essentially digital technology used for industrial control. OT assets are digital devices serving as part of OT infrastructure. The devices may be physical or virtualized.

A major challenge faced by security operators is the identification of OT system vulnerabilities without the use of active scanning techniques. Active scanning might cause interference and potential damage to the target system, thereby affecting performance, usability, and a defense mechanism that might be triggered.

To solve this problem, security operators can use a passive vulnerability detection method, comprising the monitoring of network traffic and the analysis of system logs to identify modes that might indicate the existence of a vulnerability. These techniques rely on observation of network communication and device behavior, rather than direct interaction with the target system.

Many devices store key metadata in different fields and formats, and this complicates the process of simplifying this information to perform passive vulnerability detection. For example, some devices might embed their software version in a specific header field, while other devices might include it in an exclusive tag or configuration file. Similarly, detailed information identifying, for example, operating systems, firmware and hardware components might be dispersed in different metadata fields, so this information is difficult to effectively integrate and analyse. To effectively detect vulnerabilities, it is vital that a method be developed that is able to adapt to these inconsistencies and accurately parse relevant metadata from various devices.

### Summary of the Invention

To solve the abovementioned problem, the present invention proposes a vulnerability identification method and apparatus based on a large language model, and a storage medium, to enhance passive vulnerability detection and reduce the requirement for invasive active scanning techniques.

A vulnerability identification method based on a large language model proposed in embodiments of the present invention comprises: original information acquisition, comprising: acquiring metadata of a device, and acquiring a vulnerability description of a vulnerability library from the vulnerability library; key information extraction, comprising: using a large language model to extract a key feature from the metadata, and using the large language model to extract relevant vulnerability information from the vulnerability description; field matching: using the large language model to match a field of the key feature with a field of the relevant vulnerability information to obtain a mapping between the key feature and the relevant vulnerability information; vulnerability identification: using the large language model to identify the vulnerability description matched with the metadata, on the basis of the mapping; report generation: using the large language model to generate a visual result on the basis of the vulnerability description matched with the metadata. Semantic analysis, disassembly and matching of different types of metadata and the vulnerability library is achieved, compatibility of different data is improved, more accurate associations are established between device metadata and known vulnerabilities, and device metadata is effectively analysed to accurately generate a vulnerability identification detection result.

In an embodiment, the vulnerability identification further comprises: creating a similarity scoring system based on the large language model; scoring and ranking a similarity between the metadata and the vulnerability description on the basis of the similarity scoring system. Semantic analysis of different data is achieved on the basis of the large language model, to analyse the relevance between different data descriptions more accurately, and accurately match the metadata and the vulnerability library.

In an embodiment, the method further comprises: model updating: updating the large language model on the basis of the newly acquired metadata and vulnerability description. Model learning and updating is achieved, to achieve identification and detection of vulnerabilities more promptly and accurately, and ensure that detection capability maintains relevance as time passes.

Embodiments of the present invention propose a vulnerability identification apparatus based on a large language model, the apparatus comprising: an original information acquisition module, configured to: acquire metadata of a device, and acquire a vulnerability description of a vulnerability library from the vulnerability library; a key information extraction module, configured to: use a large language model to extract a key feature from the metadata, and use the large language model to extract relevant vulnerability information from the vulnerability description; a field matching module, configured to: use the large language model to match a field of the key feature with a field of the relevant vulnerability information to obtain a mapping between the key feature and the relevant vulnerability information; a vulnerability identification module, configured to: use the large language model to identify the vulnerability description matched with the metadata, on the basis of the mapping; a report generation module, configured to: use the large language model to generate a visual result on the basis of the vulnerability description matched with the metadata. Semantic analysis, disassembly and matching of different types of metadata and the vulnerability library is achieved, compatibility of different data is improved, more accurate associations are established between device metadata and known vulnerabilities, and device metadata is effectively analysed to accurately generate a vulnerability identification detection result.

In an embodiment, the vulnerability identification module is further configured to: create a similarity scoring system based on the large language model; and score and rank a similarity between the metadata and the vulnerability description on the basis of the similarity scoring system. Semantic analysis of different data is achieved on the basis of the large language model, to analyse the relevance between different data descriptions more accurately, and accurately match the metadata and the vulnerability library.

In an embodiment, the apparatus further comprises: a model updating module, configured to: update the large language model on the basis of the newly acquired metadata and vulnerability description. Model learning and updating is achieved, to achieve identification and detection of vulnerabilities more promptly and accurately, and ensure that detection capability maintains relevance as time passes.

Embodiments of the present invention propose an electronic device, comprising: at least one processor; and a memory coupled to the at least one processor, the memory being configured to store an instruction which, when executed by the at least one processor, causes the processor to perform the method described above.

Embodiments of the present invention propose a computer-readable storage medium, storing a computer instruction which, when run, performs the method as described in any one of the embodiments above.

Embodiments of the present invention propose a computer program product, comprising a computer program which, when executed by a processor, implements the method as described in any one of the embodiments above.

### Brief Description of the Drawings

The drawings below are merely intended to illustrate and explain the present invention schematically, without limiting the scope thereof. In the drawings:
Fig. 1 is a schematic flow chart of a vulnerability identification method based on a large language model according to an embodiment of the present invention.
Fig. 2 is a structural schematic diagram of a vulnerability identification apparatus based on a large language model according to an embodiment of the present invention.
Fig. 3 is a schematic diagram of an electronic device according to an embodiment of the present invention.

### Key to the drawings:

| Number | Meaning |
|---|---|
| 100 | Vulnerability identification method based on large language model |
| S101 | Original information acquisition |
| S102 | Key information extraction |
| S103 | Field matching |
| S104 | Vulnerability identification |
| S105 | Report generation |
| S106 | Model updating |
| 200 | Vulnerability identification apparatus based on large language model |
| 201 | Original information acquisition module |
| 202 | Key information extraction module |
| 203 | Field matching module |
| 204 | Vulnerability identification module |
| 205 | Report generation module |
| 206 | Model updating module |
| 300 | Electronic device |
| 310 | Processor |
| 320 | Memory |

### Detailed Description of Embodiments

To enable clearer understanding of the technical features, objectives and effects of the present invention, particular embodiments thereof are now described with reference to the drawings.

Many specific details are expounded in the description below to enable full understanding of the present invention, which nonetheless could also be implemented in other ways different from those described here, and so is not limited by the specific embodiments disclosed below.

As shown in the present application and claims, unless otherwise expressly indicated in the context, words such as "a", "one", "one type" and/or "the" do not specifically mean the singular, and may also include the plural. Generally, the terms "comprise" and "include" only indicate the inclusion of clearly identified steps and elements, which do not constitute an exclusive enumeration; the method or device might also include other steps or elements.

Common passive vulnerability detection methods include the following. Deep packet inspection: the content of network packets is analysed, and evidence of software susceptible to attack, misconfiguration or known attack modes is sought. Log analysis: system and application logs are examined, to search for signs of suspicious activity or indicators of potential vulnerabilities. Network behavior analysis: network traffic modes are monitored, to detect abnormalities that might imply the existence of security vulnerabilities or attacks in progress. Threat intelligence feed: information from external sources, such as vulnerability databases and threat intelligence platforms, is integrated to identify potential risks associated with specific devices, software or configurations.

By using these passive detection methods, security operators can gain in-depth understanding of potential vulnerabilities while minimizing the impact on the target system and reducing the risk of triggering defense measures.

However, one of the main obstacles faced in passive vulnerability detection is the coordination of differences between device-specific self-descriptive information and standardized vulnerability data provided by the National Institute of Standards and Technology (NIST). A device generally reports its configuration, software version and other identification details in a unique way, making it difficult to match these seamlessly with vulnerability information in NIST databases (e.g. the National Vulnerability Database (NVD)). Disparity in data compatibility hampers accuracy and efficiency in vulnerability and detection work, so there is a need to develop advanced algorithms and techniques to bridge this divide and enhance network security defense.

Thus, embodiments of the present invention provide a more optimized vulnerability identification method and apparatus based on a large language model, and a storage medium. The method comprises: original information acquisition, comprising: acquiring metadata of a device, and acquiring a vulnerability description of a vulnerability library from the vulnerability library; key information extraction, comprising: using a large language model to extract a key feature from the metadata, and using the large language model to extract relevant vulnerability information from the vulnerability description; field matching: using the large language model to match a field of the key feature with a field of the relevant vulnerability information to obtain a mapping between the key feature and the relevant vulnerability information; vulnerability identification: using the large language model to identify the vulnerability description matched with the metadata, on the basis of the mapping; report generation: using the large language model to generate a visual result on the basis of the vulnerability description matched with the metadata. The technical solution in embodiments of the present invention can effectively analyse device metadata and associate it with a vulnerability library, effectively enhancing passive vulnerability detection and reducing the requirement for invasive active scanning techniques.

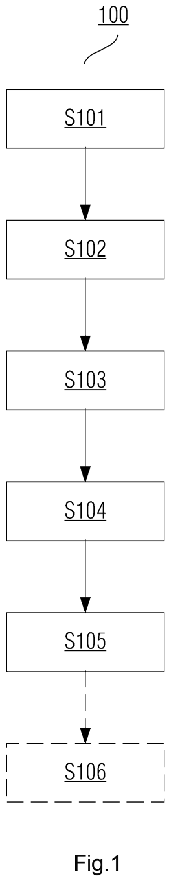

Fig. 1 is a schematic flow chart of a vulnerability identification method based on a large language model in embodiments of the present invention. As shown in Fig. 1, the method may comprise:
Step S101, original information acquisition, comprising: acquiring metadata of a device, and acquiring a vulnerability description of a vulnerability library from the vulnerability library.

The vulnerability library may be from the National Vulnerability Database (NVD), etc.

The metadata may specifically be in the following form:

| | |
|---|---|
| Device type | S7-1200 |
| Firmware version | 4.4 |
| Module type | CPU 1214C |
| Serial number | S V-XXXXXXXXX |
| MAC address | XX:XX:XX:XX:XX:XX |
| IP address | 192.168.0.10 |
| Communication protocol | Profinet, Modbus TCP, or Ethernet/IP |
| Timestamp | YYYY-MM-DD HH:MM:SS |

The vulnerability description may specifically be in the following form:

| | |
|---|---|
| Publication Date | 2022-10-11 |
| CVSS v3.1 Base Score | 9.3 |
| Affected Product and Versions | SIMATIC S7-1200 CPU family (incl. SIPLUS variants) |
| | All versions < V4.5.0 |
| Remediation | Update to V4.5.0 or later version, migrate project in TIA Portal to this version and redeploy. |
| | Within the project, configure the CPU to "Only allow secure PG/PC and HMI communication" |
| | https://support.industry.siemens.corn/cs/ww/en/view/109793280/ See further recommendations from section Workarounds and |
| | Mitigations |
| Vulnerability | CVE-2022-38465 |

In an embodiment, original information acquisition further comprises: preprocessing the metadata and the vulnerability description; the preprocessing comprising: cleaning and converting the metadata and the vulnerability description to a format suitable for the large language model.

Step S102, key information extraction, comprising: using a large language model to extract a key feature from the metadata, and using the large language model to extract relevant vulnerability information from the vulnerability description. The large language model is used to subject the metadata and the vulnerability description to semantic analysis and disassembly, to obtain a combination of a feature and information comprising multiple fields.

The key feature may be: software version, operating system, hardware component, etc., and the relevant vulnerability information may be: affected software, version number and known vulnerability.

In an embodiment, key information extraction further comprises: labeling the key feature and the relevant vulnerability information, and converting same to a format suitable for the large language model; deleting stop words, punctuation symbols and other irrelevant elements in the key feature and the relevant vulnerability information; and standardizing the key feature and the relevant vulnerability information to standard uppercase/lowercase and stem. Further standardization of the data enables it to undergo further identification processing by the large language model.

Step S103, field matching: using the large language model to match a field of the key feature with a field of the relevant vulnerability information to obtain a mapping between the key feature and the relevant vulnerability information.

The names of fields in the key feature and the relevant vulnerability information cannot be exactly the same; the large language model is used to perform corresponding matching of two fields with related content, e.g. affected software in the relevant vulnerability information should be matched and correspond to a device type in the key feature.

Step S104, vulnerability identification: using the large language model to identify the vulnerability description matched with the metadata, on the basis of the mapping.

The large language model is used to determine the vulnerability description which best matches the metadata.

In an embodiment, vulnerability identification further comprises: creating a similarity scoring system based on the large language model; scoring and ranking a similarity between the metadata and the vulnerability description on the basis of the similarity scoring system. An evaluation of the degree of relevance between the metadata and each vulnerability description is obtained through analysis of different fields, one by one, by the large language model, and it is thus possible to seek out the vulnerability description that best conforms to the metadata.

Step S105, report generation: using the large language model to generate a visual result on the basis of the vulnerability description matched with the metadata.

The large language model is used to generate a natural language report for a security operator to read, summarizing the identified vulnerability and the potential impact.

In an embodiment, the method further comprises: step S106, model updating: updating the large language model on the basis of the newly acquired metadata and vulnerability description.

The latest vulnerability description and metadata are used to train and update the large language model through learning, so that it can adapt and improve its association capability as time passes. This also ensures that synchronization is maintained with the latest vulnerability information.

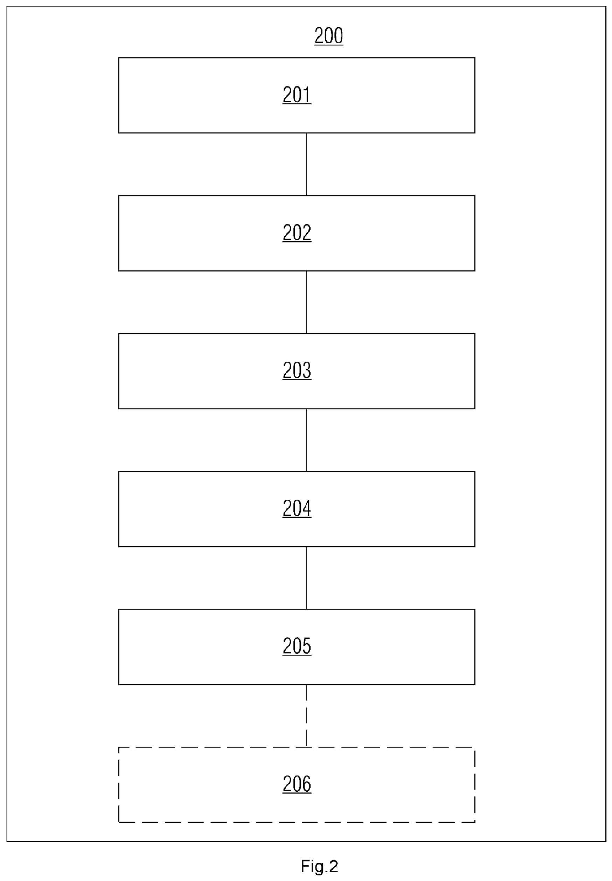

Fig. 2 is a structural schematic diagram of a vulnerability identification apparatus based on a large language model in embodiments of the present invention. As shown in Fig. 2, the apparatus may comprise:
Original information acquisition 201, configured to: acquire metadata of a device, and acquire a vulnerability description of a vulnerability library from the vulnerability library.

The vulnerability library may be from the National Vulnerability Database (NVD), etc.

The metadata may specifically be in the following form:

| | |
|---|---|
| Device type | S7-1200 |
| Firmware version | 4.4 |
| Module type | CPU 1214C |
| Serial number | S V-XXXXXXXXX |
| MAC address | XX:XX:XX:XX:XX:XX |
| IP address | 192.168.0.10 |
| Communication protocol | Profinet, Modbus TCP, or Ethernet/IP |
| Timestamp | YYYY-MM-DD HH:MM:SS |

The vulnerability description may specifically be in the following form:

| | |
|---|---|
| Publication Date | 2022-10-11 |
| CVSS v3.1 Base Score | 9.3 |
| Affected Product and Versions | SIMATIC S7-1200 CPU family (incl. SIPLUS variants) |
| | All versions < V4.5.0 |
| Remediation | Update to V4.5.0 or later version, migrate project in TIA Portal to this version and redeploy. |
| | Within the project, configure the CPU to "Only allow secure PG/PC and HMI communication" |
| | https://support.industry.siemens.com/cs/ww/en/view/109793280/ |
| | See further recommendations from section Workarounds and Mitigations |
| Vulnerability | CVE-2022-38465 |

In an embodiment, an original information module is further configured to: preprocess the metadata and the vulnerability description; the preprocessing comprising: cleaning and converting the metadata and the vulnerability description to a format suitable for the large language model.

A key information extraction module 202, configured to: use a large language model to extract a key feature from the metadata, and use the large language model to extract relevant vulnerability information from the vulnerability description. The large language model is used to subject the metadata and the vulnerability description to semantic analysis and disassembly, to obtain a combination of a feature and information comprising multiple fields.

The key feature may be: software version, operating system, hardware component, etc., and the relevant vulnerability information may be: affected software, version number and known vulnerability.

In an embodiment, the key information extraction module is further configured to: label the key feature and the relevant vulnerability information, and convert same to a format suitable for the large language model; delete stop words, punctuation symbols and other irrelevant elements in the key feature and the relevant vulnerability information; and standardize the key feature and the relevant vulnerability information to standard uppercase/lowercase and stem. Further standardization of the data enables it to undergo further identification processing by the large language model.

A field matching module 203, configured to: use the large language model to match a field of the key feature with a field of the relevant vulnerability information to obtain a mapping between the key feature and the relevant vulnerability information.

The names of fields in the key feature and the relevant vulnerability information cannot be exactly the same; the large language model is used to perform corresponding matching of two fields with related content, e.g. affected software in the relevant vulnerability information should be matched and correspond to a device type in the key feature.

A vulnerability identification module 204, configured to: use the large language model to identify the vulnerability description matched with the metadata, on the basis of the mapping.

The large language model is used to determine the vulnerability description which best matches the metadata.

In an embodiment, the vulnerability identification module is further configured to: create a similarity scoring system based on the large language model; and score and rank a similarity between the metadata and the vulnerability description on the basis of the similarity scoring system. An evaluation of the degree of relevance between the metadata and each vulnerability description is obtained through analysis of different fields, one by one, by the large language model, and it is thus possible to seek out the vulnerability description that best conforms to the metadata.

A report generation module 205, configured to: use the large language model to generate a visual result on the basis of the vulnerability description matched with the metadata.

The large language model is used to generate a natural language report for a security operator to read, summarizing the identified vulnerability and the potential impact.

In an embodiment, the apparatus further comprises: a model updating module 206, configured to: update the large language model on the basis of the newly acquired metadata and vulnerability description.

The latest vulnerability description and metadata are used to train and update the large language model through learning, so that it can adapt and improve its association capability as time passes. This also ensures that synchronization is maintained with the latest vulnerability information.

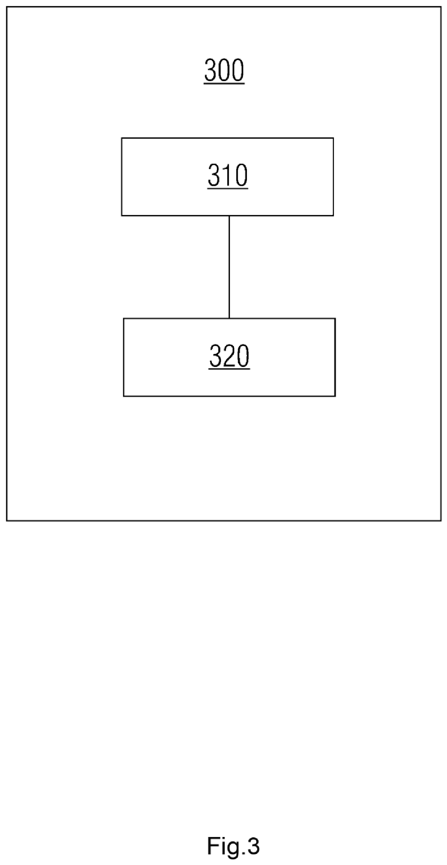

The present invention further proposes an electronic device 300. Fig. 3 is a schematic diagram of an electronic device 300 according to an embodiment of the present invention. As shown in Fig. 3, the electronic device 300 comprises a processor 310 and a memory 320, the memory 320 storing an instruction which, when executed by the processor 310, realizes the method 100 described above.

The present invention further proposes a computer-readable storage medium, storing a computer instruction which, when run, performs the method described above.

The present invention further proposes a computer program product, comprising a computer program which, when executed by a processor, implements the method described above.

Some aspects of the method and apparatus of the present invention may be implemented fully by hardware, implemented fully by software (including firmware, resident software, microcode, etc.), or implemented by a combination of hardware and software. All of the above hardware or software may be referred to as "data blocks", "modules", "engines", "units", "components" or "systems". The processor may be one or more application specific integrated circuit (ASIC), digital signal processor (DSP), digital signal processing device (DAPD), programmable logic device (PLC), field programmable gate array (FPGA), processor, controller, microcontroller, microprocessor or a combination thereof. In addition, each aspect of the present invention may be manifested as a computer product located in one or more computer-readable medium, the product including computer-readable program code. For example, computer-readable media may include, but are not limited to, magnetic storage devices (e.g. hard disks, floppy disks, magnetic tapes......), optical discs (e.g. compact discs (CD), digital versatile discs (DV) ......) , smart cards and flash memory devices (e.g. cards, sticks, key drivers......) .

Flow charts are used herein to illustrate the operations performed in the method according to embodiments of the present application. It should be understood that the foregoing operations are not necessarily performed precisely in order. On the contrary, various steps may be processed in reverse order or simultaneously. At the same time, other operations may be added to these processes, or one or more operating step may be removed from these processes.

It should be understood that although the description herein is based on various embodiments, it is by no means the case that each embodiment contains just one independent technical solution. Such a method of presentation is adopted herein purely for the sake of clarity. Those skilled in the art should consider the description in its entirety. The technical solutions in the various embodiments could also be suitably combined to form other embodiments comprehensible to those skilled in the art.

The above are merely particular schematic embodiments of the present invention, which are not intended to define the scope thereof. Any equivalent changes, modifications or combinations made by those skilled in the art without departing from the concept and principles of the present invention should be included in the scope of protection thereof.

## Claims

1. A vulnerability identification method (100) based on a large language model, **characterized in that** the method comprises:
original information acquisition (S101), comprising: acquiring metadata of a device, and acquiring a vulnerability description from a vulnerability library;
key information extraction (S102), comprising: using a large language model to extract a key feature from the metadata, and using the large language model to extract relevant vulnerability information from the vulnerability description;
field matching (S103): using the large language model to match a field of the key feature with a field of the relevant vulnerability information to obtain a mapping between the key feature and the relevant vulnerability information;
vulnerability identification (S104): using the large language model to identify the vulnerability description matched with the metadata, on the basis of the mapping;
report generation (S105): using the large language model to generate a visual result on the basis of the vulnerability description matched with the metadata.

2. The method as claimed in claim 1, **characterized in that** the original information acquisition further comprises:
preprocessing the metadata and the vulnerability description;
the preprocessing comprising: cleaning and converting the metadata and the vulnerability description to a format suitable for the large language model.

3. The method as claimed in claim 1, **characterized in that** the key information extraction further comprises:
labeling the key feature and the relevant vulnerability information, and converting same to a format suitable for the large language model;
deleting stop words, punctuation symbols and other irrelevant elements in the key feature and the relevant vulnerability information;
standardizing the key feature and the relevant vulnerability information to standard uppercase/lowercase and stem.

4. The method as claimed in claim 1, **characterized in that** the vulnerability identification further comprises:
creating a similarity scoring system based on the large language model;
scoring and ranking a similarity between the metadata and the vulnerability description on the basis of the similarity scoring system.

5. The method as claimed in claim 1, **characterized in that** the method further comprises:
model updating (S106): updating the large language model on the basis of the newly acquired metadata and vulnerability description.

6. A vulnerability identification apparatus (200) based on a large language model, **characterized in that** the apparatus comprises:
an original information acquisition module (201), configured to: acquire metadata of a device, and acquire a vulnerability description of a vulnerability library from the vulnerability library;
a key information extraction module (202), configured to: use a large language model to extract a key feature from the metadata, and use the large language model to extract relevant vulnerability information from the vulnerability description;
a field matching module (203), configured to: use the large language model to match a field of the key feature with a field of the relevant vulnerability information to obtain a mapping between the key feature and the relevant vulnerability information;
a vulnerability identification module (204), configured to: use the large language model to identify the vulnerability description matched with the metadata, on the basis of the mapping;
a report generation module (205), configured to: use the large language model to generate a visual result on the basis of the vulnerability description matched with the metadata.

7. The apparatus as claimed in claim 6, **characterized in that** the original information acquisition module is further configured to:
preprocess the metadata and the vulnerability description;
the preprocessing comprising: cleaning and converting the metadata and the vulnerability description to a format suitable for the large language model.

8. The apparatus as claimed in claim 6, **characterized in that** the key information extraction module is further configured to:
label the key feature and the relevant vulnerability information, and convert same to a format suitable for the large language model;
delete stop words, punctuation symbols and other irrelevant elements in the key feature and the relevant vulnerability information; and
standardize the key feature and the relevant vulnerability information to standard uppercase/lowercase and stem.

9. The apparatus as claimed in claim 6, **characterized in that** the vulnerability identification module is further configured to:
create a similarity scoring system based on the large language model; and
score and rank a similarity between the metadata and the vulnerability description on the basis of the similarity scoring system.

10. The apparatus as claimed in claim 6, **characterized in that** the apparatus further comprises:
a model updating module (206), configured to: update the large language model on the basis of the newly acquired metadata and vulnerability description.

11. An electronic device (300), comprising:
at least one processor (310); and
a memory (320) coupled to the at least one processor (310), the memory (320) being configured to store an instruction which, when executed by the at least one processor (310), causes the processor (310) to perform the method as claimed in any one of claims 1 - 5.

12. A computer-readable storage medium, storing a computer instruction which, when run, performs the method according to any one of Claims 1 - 5.

13. A computer program product, **characterized by** comprising a computer program which, when executed by a processor, implements the method according to any one of Claims 1 - 5.
